# EUROPEAN PATENT APPLICATION

(11) **EP 3 059 669 A1**
(43) Date of publication of application: **24.08.2016**
(21) Application number: 15155837.6
(22) Date of filing: 19.02.2015
(51) Int. Cl.: G06F 3/0487, G06F 3/01, G06F 3/0481

(54) **Controlling display of video content**

(71) Applicant: Nokia Technologies OY, 02610 Espoo (FI)
(72) Inventor: Lehtiniemi, Arto Juhani, 33880 Lempäälä (FI); Vilermo, Miikka Tapani, 37200 Siuro (FI); Roimela, Kimmo Tapio, 33710 Tampere (FI); Shetty, Ranjeeth Ravindra, 33710 Tampere (FI)
(74) Representative: Swindell & Pearson Limited

(57) **Abstract**

A method, computer program and apparatus are provided. The method comprises: causing a display of a device to display video content; determining at least one region of interest in the video content; detecting user manipulation of an external housing of the device while the video content is being displayed on the display; and responding to detection of user manipulation of the external housing of the device by enlarging a determined region of interest on the display.

## Description

### TECHNOLOGICAL FIELD

Embodiments of the present invention relate to controlling display of video content. In particular, they relate to controlling display of video content of a hand portable electronic device.

### BACKGROUND

The limited size of hand portable electronic devices provides a constraint on the size of the display that can be provided in those devices. When viewing video content on such devices, sometimes it can be difficult to see detail in the video content due to the limited size of the display.

### BRIEF SUMMARY

According to various, but not necessarily all, embodiments of the invention there is provided a method, comprising: causing a display of a device to display video content; determining at least one region of interest in the video content; detecting user manipulation of an external housing of the device while the video content is being displayed on the display; and responding to detection of user manipulation of the external housing of the device by enlarging a determined region of interest on the display.

According to various, but not necessarily all, embodiments of the invention there is provided computer program code that, when performed by at least one processor, causes at least the following to be performed: causing a display of a device to display video content; determining at least one region of interest in the video content; detecting user manipulation of an external housing of the device while the video content is being displayed on the display; and responding to detection of user manipulation of the external housing of the device by enlarging a determined region of interest on the display.

According to various, but not necessarily all, embodiments of the invention there is provided an apparatus, comprising: means for causing a display of a device to display video content; means for determining at least one region of interest in the video content; means for detecting user manipulation of an external housing of the device while the video content is being displayed on the display; and means for responding to user manipulation of the external housing of the device by enlarging a determined region of interest on the display.

According to various, but not necessarily all, embodiments of the invention there is provided an apparatus, comprising: at least one processor; and at least one memory storing computer program code configured, working with the at least one processor, to cause the apparatus to perform at least the following: causing a display of a device to display video content; determining at least one region of interest in the video content; detecting user manipulation of an external housing of the device while the video content is being displayed on the display; and responding to detection of user manipulation of the external housing of the device by enlarging a determined region of interest on the display.

According to various, but not necessarily all, embodiments of the invention there is provided a method, comprising: causing a display of a device to display video content; determining at least one region of interest in the video content; detecting a change in orientation of the device while the video content is being displayed on a display; and responding to detection of the change in orientation of the device by enlarging a determined region of interest on the display.

According to various, but not necessarily all, embodiments of the invention there is provided an apparatus, comprising: means for causing a display of a device to display video content; means for determining at least one region of interest in the video content; means for detecting a change in orientation of the device while the video content is being displayed on the display; and means for responding to detection of a change in orientation of the device by enlarging a determined region of interest on the display.

According to various, but not necessarily all, embodiments of the invention there is provided examples as claimed in the appended claims.

### BRIEF DESCRIPTION

For a better understanding of various examples that are useful for understanding the detailed description, reference will now be made by way of example only to the accompanying drawings in which:
Fig. 1 illustrates a first apparatus in the form of a chip or chipset;
Fig. 2 illustrates a second apparatus in the form of a hand portable electronic device;
Fig. 3 illustrates a flowchart of a method;
Fig. 4 illustrates video content being displayed on a display of the apparatus illustrated in Fig. 2;
Fig. 5 illustrates a situation in which multiple regions of interest have been identified in the video content being displayed;
Fig. 6 illustrates the video content being displayed on the display of the apparatus illustrated in Fig. 2 following enlargement of a region of interest in the video content;
Fig. 7 illustrates the video content being displayed on a display of the apparatus illustrated in Fig. 2, where a region of interest in the video content has been determined based at least partially upon user input; and
Fig. 8 illustrates video content being displayed upon a display of the apparatus illustrated in Fig. 2, where a region of interest in the video content has been enlarged and other regions of interest in the video content are shown in picture-in-picture format.

### DETAILED DESCRIPTION

Embodiments of the invention relate to controlling a display to display video content in a manner that provides a viewer with an enhanced viewing experience.

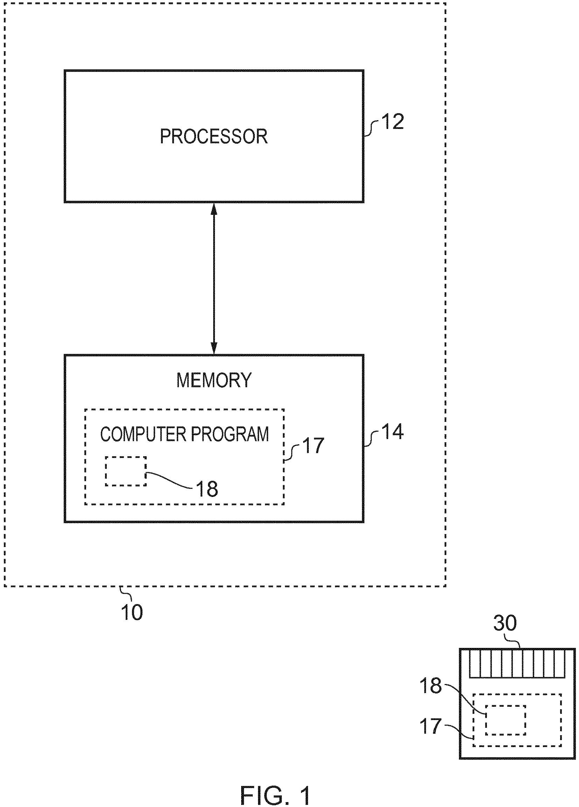

Fig. 1 illustrates an apparatus 10 that may be a chip or a chipset. The apparatus 10 comprises one or more processors 12 (in the form of processing circuitry) and at least one memory 14 (in the form of memory circuitry). A single processor 12 and a single memory 14 are shown in Fig. 1 for illustrative purposes.

The processor 12 is configured to read from and write to the memory 14. The processor 12 may comprise an output interface via which data and/or commands are output by the processor 12 and an input interface via which data and/or commands are input to the processor 12.

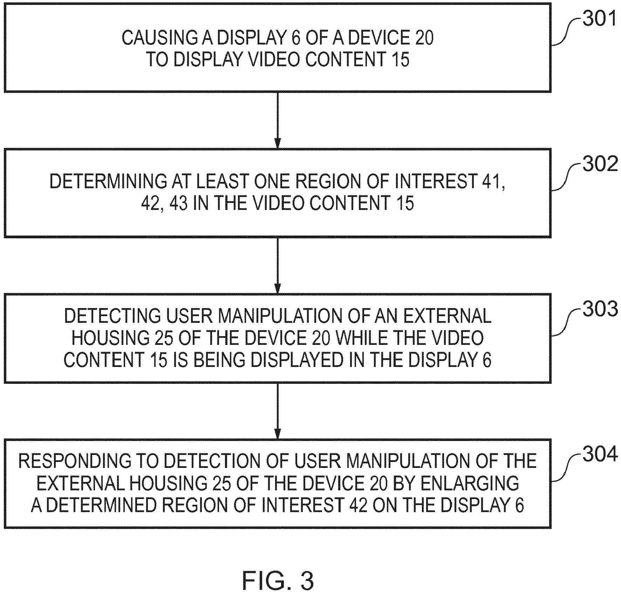

The memory 14 stores a computer program 17 comprising computer program instructions/code 18 that control the operation of the apparatus 10 when loaded into the processor 12. The processor 12, by reading the memory 14, is able to load and execute the computer program code 18. The computer program code 18 provides the logic and routines that enables the apparatus 10 to perform the method illustrated in Fig. 3. The processor 12, the memory 14 and the computer program code therefore provide the means for performing the method illustrated in Fig. 3 and described below.

Although the memory 14 is illustrated as a single component it may be implemented as one or more separate components some or all of which may be integrated/removable and/or may provide permanent/semi-permanent/ dynamic/cached storage.

The computer program code 18 may arrive at the apparatus 10 via any suitable delivery mechanism 30. The delivery mechanism 30 may be, for example, a non-transitory computer-readable storage medium such as a compact disc read-only memory (CD-ROM) or digital versatile disc (DVD). The delivery mechanism 30 may be a signal configured to reliably transfer the computer program code 18. The apparatus 10 may cause the propagation or transmission of the computer program code 18 as a computer data signal.

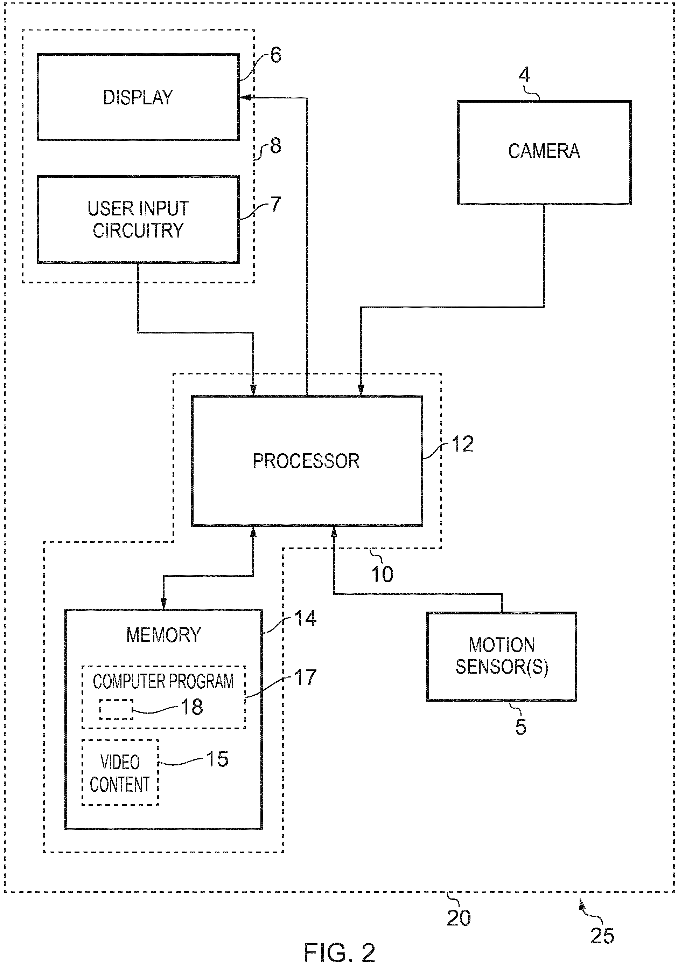

Fig. 2 illustrates a further apparatus 20 in the form of an electronic device. The electronic device 20 may be a hand portable electronic device such as, for example, a mobile telephone, a portable music player, a hand held games console or a tablet computer.

The electronic device/apparatus 20 illustrated in Fig. 2 includes a camera 4, one or more motion sensor(s) 5, a display 6, user input circuitry 7, an external housing 25 and the apparatus 10 illustrated in Fig. 1. The camera 4 is an optional feature and, in some implementations, it may not be present. In this example the external housing 25 houses the camera 4, the motion sensor(s) 5, the display 6, the user input circuitry 7, the processor 12 and the memory 14.

The one or more motion sensor(s) 5 are configured to detect motion of the device 20. In some implementations, the motion sensors 5 may include one or more accelerometers, gyroscopes and/or magnetometers. Alternatively or additionally, the one or more motion sensors 5 may comprise one or more sensors for detecting distortion of the device 2, such as one or more strain gauges.

The display 6 is configured to display information under the control of the processor 12. The display 6 may be any type of display. It may, for example, be a liquid crystal display (LCD), an organic light emitting diode (OLED) display or a quantum dot display.

The user input circuitry 7 is configured to receive inputs from a user. In response to receiving an input from a user, the user input circuitry 7 provides a signal to the processor 12 that depends upon the input that has been provided by the user.

In some embodiments of the invention, at least part of the user input circuitry 7 is integrated with the display 6, in the form of a touch sensitive display 8. The touch sensitive display 8 may be any type of touch sensitive display. It might function, for example, using capacitive, resistive, infrared, dispersive signal and/or acoustic pulse technology.

The memory 14 is illustrated in Fig. 2 as storing video content 15. This is described in further detail below.

The elements 4, 5, 6, 7, 12 and 14 are operationally coupled and any number or combination of intervening elements can exist between them (including no intervening elements).

Fig. 3 illustrates a flowchart of a method according to embodiments of the invention. At block 301 of Fig. 3, a user provides input, at the user input circuitry 7, to cause the processor 12 of the device 20 to cause display 6 to display video content 15. In some implementations, the video content 15 is pre-recorded video content which is stored as data locally in the memory 14 of the device 20. In other implementations, the video content 15 is pre-recorded, stored as data remotely from the device 20 and streamed via the device 20 over a network. The device 20 may, for instance, include a radio frequency receiver/transceiver for streaming the video content 15.

If the video content 15 is pre-recorded, it may have been captured by the camera 4 of the device 20. Alternatively, the video content 15 may have been captured by a different device.

In some implementations, the video content 15 is not pre-recorded but is instead a real time video feed from the camera 4 of the device 20. This may be provided, for example, when the device 20 is in a viewfinder mode that enables the user to cause the device 20 to record still images and/or video content.

In some implementations, the video content 15 may have a different resolution from the display 6 of the device 20. The aspect ratio of the video content 15 may or may not be the same as the aspect ratio of the display 6.

Consider an example in which the video content 15 is captured at a UHD (Ultra High Definition) resolution of 3840 x 2160 pixels and the display has a FHD (Full High Definition) resolution of 1920 x 1080. The video content 15 has four times as many pixels as the display 6 so, if the full extent of the video content 15 is to be displayed in terms of both height and width, the processor 12 may downscale the video content 15 by converting sets of four pixels in the video content 15 into single pixels for display on the display 6.

When the video content 15 is displayed by the display 6, at block 302 in Fig. 3, the processor 12 determines at least one region of interest in the video content 15. In some implementations, the processor 12 continuously analyses the video content 15, over time, to determine regions of interest in the video content 15. Over time, different regions of interest may enter and exit the video content 15.

The processor 12 may, for example, perform image analysis on the video content 15 to determine regions of interest. The regions of interest may be determined without user guidance. Alternatively or additionally, the processor 12 may determine regions of interest in the video content 15 from metadata that might be associated with the video content 15. Alternatively or additionally, the determination of the regions of interest might be based at least partially upon user input provided by a user.

Regions of interest may be or include objects of interest. Objects of interest in the video content 15 may, for example, include human bodies, faces, or objects that are identifiable against a background (such as, for instance, a skyscraper against a blue sky), etc.

The regions of interest may, for instance, be determined based on a user's prior video consumption habits, based on what kind of video content the user has watched and/or based on a user profile defining subjects that are interesting to the user. For example, if a user has been watching videos relating to Arsenal football team and follows a particular Arsenal player in a social networking service, the processor 12 may identify that Arsenal player as a region of interest in video content 15 based on that information. Metadata indicating a user's prior video consumption habits, the kind of video content the user has watched and/or containing a user profile defining subjects that are interesting to the user may be stored in the memory 14 of the device 20 or in a memory remote from the device 20 (for instance, as part of a network service).

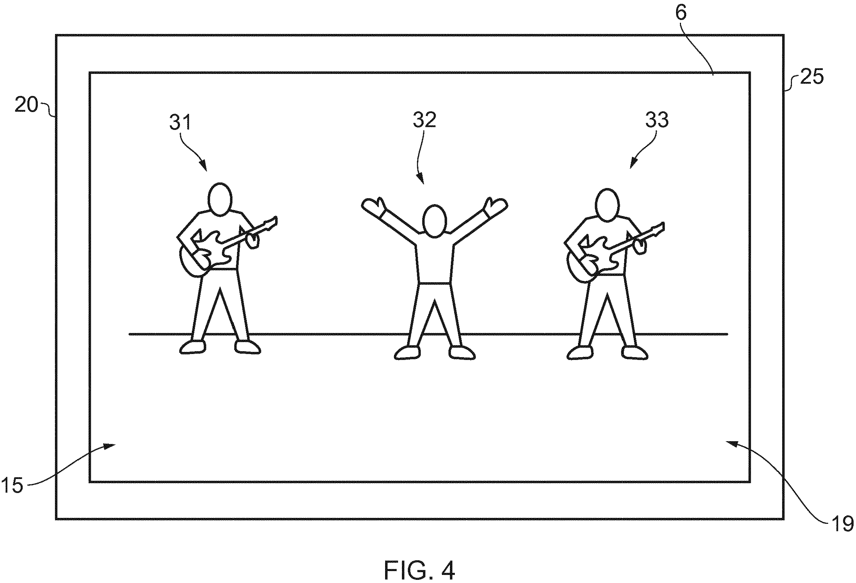

Fig. 4 illustrates an example of a scene 19 in the video content 15 being displayed on the display 6. The scene 19 includes a band consisting of a first person 31, a second person 32 and a third person 33.

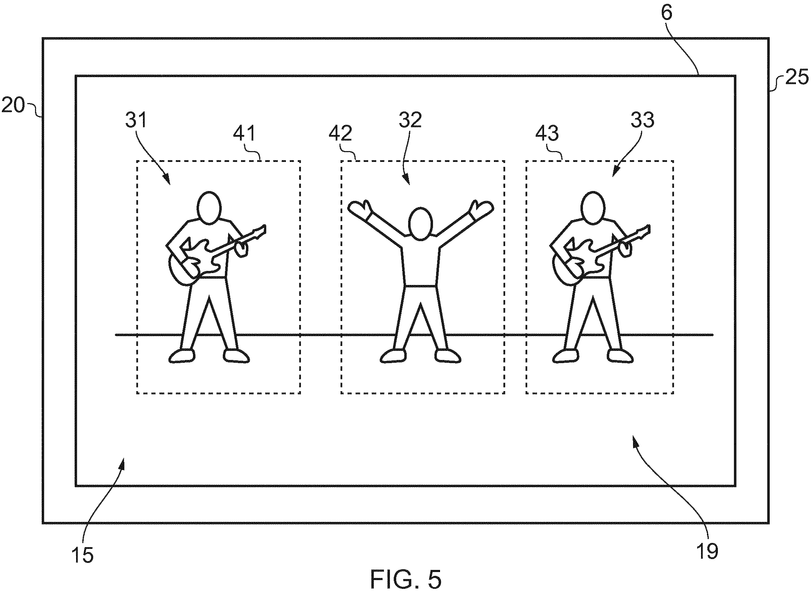

Fig. 5 illustrates the same scene 19 being displayed on the display 6 as in Fig. 4, but, in Fig. 5, the processor 12 has determined that the first, second and third people 31-33 displayed on the display are first, second and third regions of interest 41-43 respectively in the video content 15 (for example, by performing image analysis on the scene 19 as the video content is being displayed on the display 6).

It may or may not be apparent to a user while the video content 15 is being viewed that the regions of interest 41-43 have been determined by the processor 12. For example, the regions of interest 41-43 may or may not be highlighted while the video content 15 is being displayed.

At block 303 in Fig. 3, the user manipulates the external housing 25 of the device 20 while the video content 15 is being displayed on the display 6. In this particular example, the user manipulates the external housing 25 by changing the orientation of the external housing 25 from a landscape orientation (as illustrated in Figs. 4 and 5) to a portrait orientation. The processor 12 detects that user manipulation of the external housing 25 has occurred from inputs received from the motion sensor(s) 5 while the video content 15 is being displayed on the display 6.

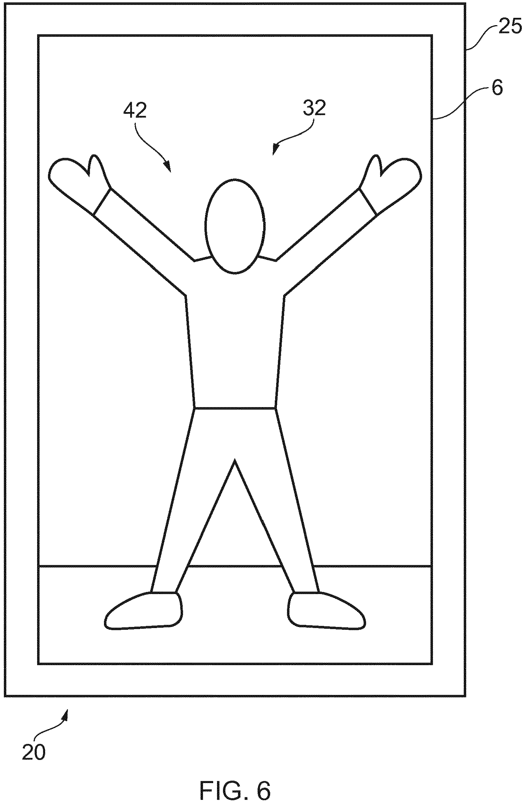

At block 304 in Fig. 3, the processor 12 responds to detection of user manipulation of the external housing 25 of the device 20 by enlarging a determined region of interest 42 on the display 6, as shown in Fig. 6.

It can also be seen in Fig. 6 that the processor 12 has changed the orientation of the region of interest 42 that is displayed on the display 6.

The processor 12 effectively causes the video content 15 to enter a "zoomed in" state by "zooming in" on the determined region of interest 42. This is done by providing a narrower angle view of the scene 19 that includes (and may be centered upon) the determined region of interest 42.

When the processor 12 enlarges the determined region of interest 42 on the display 6, it removes other portions of the scene 19 from display, such as the other regions of interest 41, 43. Enlargement of the region of interest 42 on the display 6 involves causing more pixels of the display 6 to display the region of interest than was previously the case when the whole scene 19 was being displayed (as shown in Figs. 4 and 5).

In some implementations, if the resolution of the video content 15 is greater than that of the display 6, the processor 12 may display the enlarged region of interest 42 in greater detail than was previously the case when the whole scene 19 was displayed on the display 6.

In this example, prior to the detection of user manipulation of the external housing 25, the processor 12 had identified multiple regions of interest 41-43 in the scene of the video content 15 that was being displayed. The processor 12 then made a decision to display one of the regions of interest 42 from the multiple regions of interest 41-43 which had been determined. This decision may be made automatically by the processor 12 without further user input following user manipulation of the external housing 25. This decision may for example, have been made on some predefined criteria. For instance, the predefined criteria may cause the processor 12 to select a centrally positioned region of interest 42 over regions of interest 41, 43 that are not centrally positioned.

The extent to which a region of interest is enlarged in response to detection of user manipulation of the external housing 25 might be fixed (for example, 2x enlargement or 10x enlargement). Alternatively, the extent to which the region of interest is enlarged might depend upon the size of the region of interest at the point in time at which the processor 12 detects that user manipulation of the external housing 25 has occurred. The processor 12 might, for example, enlarge the region of interest such that it substantially fills the display 6 (irrespective of the size of the region of interest at the point in time at which the processor 12 detects that user manipulation of the external housing 25 has occurred).

The processor 12 may enable the user to alter the extent of the enlargement (for example, by responding to a reverse pinch input provided at a touch sensitive display 8 by the user). The processor 12 may store a value in the memory 14 indicating the extent of the enlargement that was performed and subsequently use the stored value when enlarging future regions of interest. For instance, if the processor 12 automatically enlarged the region of interest to 2x the original size in response to user manipulation of the external housing 25 and then the user manually enlarged the region of interest to 5x the original size, the next time enlargement of a region of interest is performed by the processor 12, it might be automatically enlarged by the processor 12 to 5x the original size.

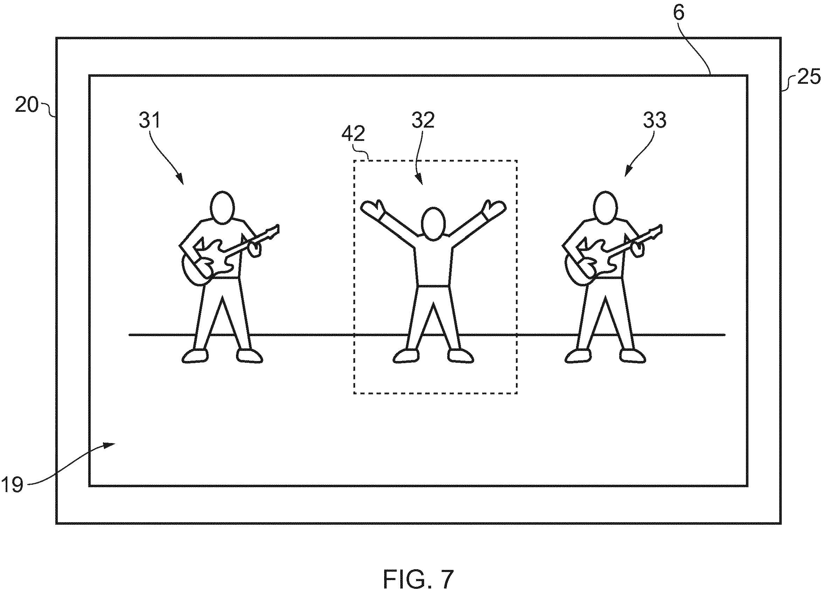

In some implementations, the region of interest 42 that is enlarged on the display 6 after detection of user manipulation of the external housing 25 may be based at least partially on user input, as mentioned above. Fig. 7 illustrates an example in which the user has provided input, via the user input circuitry for instance, to select the central region of interest 42. In some implementations, the processor 12 may control the display 6 to highlight a region of interest 42 that has been selected by a user.

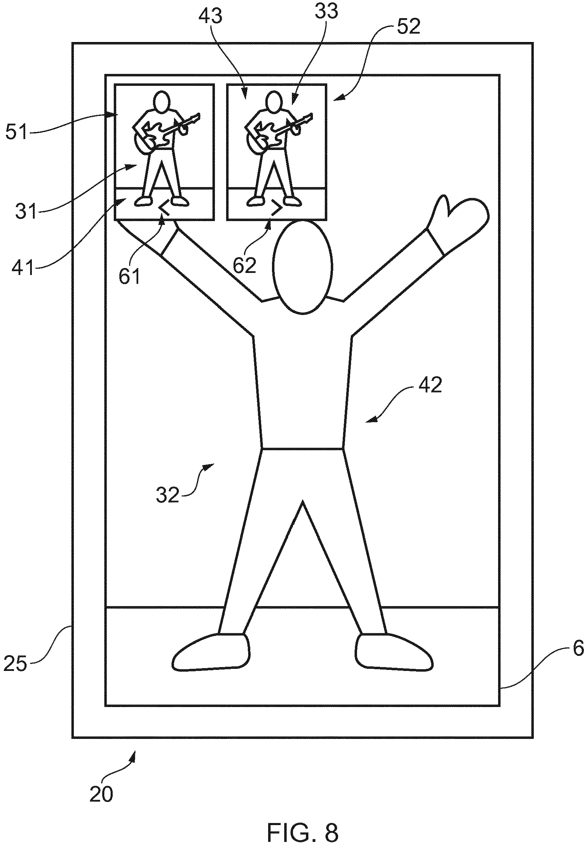

The processor 12 may enable a user to change the displayed view when the enlarged region of interest 42 is displayed on the display 6. For example, the processor 12 may respond to user input to cause the displayed view to pan away from the enlarged region of interest 42, within the video content 15, while the video content 15 continues to be displayed in its "zoomed in" state. The user input that is provided by the user may be provided via the user input circuitry 7 or, alternatively, the user input may be provided by moving (the whole of) the external housing 25 in space, which is detected by the motion sensor(s) 5 or the camera 4.In some embodiments, when a determined region of interest 42 is displayed on the display 6, other regions of interest 41, 43 may be displayed on the display 6 simultaneously in picture-in-picture format. This is illustrated in Fig. 8, where the first and third regions of interest 41, 43 are displayed as thumbnails 51, 52. It may be that both the enlarged region of interest 42 and the other regions of interest 41, 43 are shown in motion in picture-in-picture format. If, for instance, the user provides user input via the user input circuitry 7 to select the first or third regions of interest 41, 43 while they are displayed as thumbnails 51, 52, the processor 12 may respond by causing the selected region of interest 41, 43 to be displayed in enlarged form and to cause the region of interest 42 that is currently displayed in enlarged form to be displayed as a thumbnail.

In some implementations, the processor 12 may cause the display 6 to display an indicator 61, 62 in respect of each region of interest 41, 43 displayed as a thumbnail to indicate that region of interest's position in the video content 15 relative to the enlarged region of interest 42.

In some alternative embodiments of the invention, user manipulation of the housing may not necessarily involve a change in orientation of the external housing 25. For example, alternatively, a user may manipulate the external housing 25 by distorting the external housing 25. In response to detecting such distortion via one or more inputs from the motions sensor(s) 5, the processor 12 responds by enlarging a determined region of interest on the display 6. It will be recognized that both i) embodiments where a change in orientation of the external housing 25 is detected and ii) embodiments where distortion of the external housing 25 is detected involve detecting movement of at least a portion of the external housing 25.

In the example described above and illustrated in Figs. 4 to 8, the enlarged region of interest 42 is provided from the same video content 15 that is displayed prior to the enlargement. In other examples, the enlarged region of interest 42 may be from different video content (that may be stored in the memory 14 of the device 20 or in a memory remote from the device 20). For instance, the enlarged region of interest may be from simultaneously captured (different) video content in which the region of interest was/is being captured from a different perspective with a different camera from that used to capture the video content 15 In this regard, if the determined region of interest is an object of interest such as a person, an enlarged region of interest from different video content may show the person from a different perspective.

References to 'computer-readable storage medium', 'computer', 'processor' etc. should be understood to encompass not only computers having different architectures such as single/multi-processor architectures and sequential (Von Neumann)/parallel architectures but also specialized circuits such as field-programmable gate arrays (FPGA), application specific circuits (ASIC), signal processing devices and other processor. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

The blocks illustrated in Fig. 3 may represent steps in a method and/or sections of code in the computer program 17. The illustration of a particular order to the blocks does not necessarily imply that there is a required or preferred order for the blocks and the order and arrangement of the block may be varied. Furthermore, it may be possible for some blocks to be omitted.

Although embodiments of the present invention have been described in the preceding paragraphs with reference to various examples, it should be appreciated that modifications to the examples given can be made without departing from the scope of the invention as claimed. For example, the processor 12 may cause different regions of interest 41-43 to be enlarged on the display 6 depending upon how the user manipulates the external housing 25 of the device 20. If the user, for instance, rotates the external housing 25 in one direction from a landscape orientation to a portrait orientation (such as clockwise), the processor 12 may respond by causing one region of interest to be enlarged on the display 6, whereas if the user, for instance, rotates the external housing 25 in the opposite direction (such as anti-clockwise) from the landscape orientation to a (different) portrait orientation, the processor 12 may respond to causing a different region of interest to be enlarged on the display 6.

The user manipulation of the external housing 25 that is detected by the processor 12 could determine the source of the enlarged region of interest that is displayed. First user manipulation, such as a user rotating the external housing 25 in one direction from a landscape orientation to a portrait orientation (for instance, clockwise), may cause the processor 12 to respond by causing an enlarged region of interest to be displayed from the video content 15 that was being displayed prior to the rotation. Second user manipulation, such as a user rotating the external housing 25 in the opposite direction (for instance, anti-clockwise) from the landscape orientation to a (different) portrait orientation, may cause the processor 12 to respond by causing an enlarged region of interest to be displayed from video content that is different from the video content 15 that was being displayed prior to the rotation. As explained above, in the latter case, the enlarged region of interest may be from simultaneously captured (different) video content in which the region of interest was/is being captured from a different perspective.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the applicant claims protection in respect of any patentable feature or combination of features hereinbefore referred to and/or shown in the drawings whether or not particular emphasis has been placed thereon.

## Claims

1. A method, comprising:
causing a display of a device to display video content;
determining at least one region of interest in the video content;
detecting user manipulation of an external housing of the device while the video content is being displayed on the display; and
responding to detection of user manipulation of the external housing of the device by enlarging a determined region of interest on the display.

2. The method of claim 1, wherein detecting user manipulation of the external housing comprises detecting movement of at least a portion of the external housing.

3. The method of claim 1 or claim 2, wherein detecting user manipulation of the external housing comprises detecting a change in orientation of the external housing.

4. The method of claim 3, wherein detecting the change in orientation of the external housing comprises detecting a change from a landscape orientation to a portrait orientation.

5. The method of claim 1 or claim 2, wherein detecting user manipulation of the external housing comprises detecting user distortion of the external housing.

6. The method of any of the preceding claims, wherein the determined region of interest is enlarged automatically, without further user input following user manipulation of the external housing.

7. The method of any of the preceding claims, wherein the region of interest is determined automatically, without user guidance, by analyzing the video content.

8. The method of any of claims 1 to 6, wherein the region of interest is determined at least partially based on user input.

9. The method of any of the preceding claims, further comprising: panning away from the enlarged region of interest, within the video content.

10. The method of claim 9, wherein panning away from the at least one region of interest, following enlargement of the enlarged region of interest, is performed in response to detection of movement of the external housing.

11. The method of any of the preceding claims, further comprising: causing the display to display the enlarged region of interest and one or more further regions of interest simultaneously in picture-in-picture format.

12. Computer program code that, when performed by at least one processor, causes the method of any of the preceding claims to be performed.

13. An apparatus, comprising:
means for causing a display of a device to display video content;
means for determining at least one region of interest in the video content;
means for detecting user manipulation of an external housing of the device while the video content is being displayed on the display; and
means for responding to detection of user manipulation of the external housing of the device by enlarging a determined region of interest on the display.

14. The apparatus of claim 13, further comprising means for performing the method of one or more of claims 2 to 11.

15. The apparatus of claim 13 or claim 14, wherein the apparatus is the device.
